# EUROPEAN PATENT APPLICATION

(11) **EP 3 751 647 A1**
(43) Date of publication of application: **16.12.2020**
(21) Application number: 19751288.2
(22) Date of filing: 23.01.2019
(51) Int. Cl.: H01M 4/62, C01B 32/19, C01B 32/225, H01G 11/06, H01G 11/24, H01G 11/32, H01G 11/36, H01G 11/64, H01M 10/052, H01M 10/0567, H01M 4/36, H01M 4/525

(54) **CARBON MATERIAL, ELECTRODE FOR ELECTRICITY STORAGE DEVICES, ELECTRICITY STORAGE DEVICE, AND NONAQUEOUS ELECTROLYTE SECONDARY BATTERY**

(30) Priority: 09.02.2018 JP 2018021879; 05.03.2018 JP 2018038725
(71) Applicant: SEKISUI CHEMICAL CO., LTD., Osaka-shi Osaka 530-8565 (JP)
(72) Inventor: SAWADA, Yuuki, Mishima-gun, Osaka 618-0021 (JP); MASUDA, Hiroki, Mishima-gun, Osaka 618-0021 (JP); SASAGAWA, Naoki, Mishima-gun, Osaka 618-0021 (JP); UCHIDA, Kazuho, Mishima-gun, Osaka 618-0021 (JP); FUJIWARA, Akihiko, Mishima-gun, Osaka 618-0021 (JP)
(74) Representative: Ter Meer Steinmeister & Partner
(86) International application number: PCT/JP2019/001980
(87) International publication number: WO 2019/155881

(57) **Abstract**

Provided is a carbon material that can enhance a battery characteristic represented by the cycle characteristic of an electricity storage device. A carbon material including a graphene layered structure, the carbon material being mixed with Si at a weight ratio of 1 : 1 to produce a mixture, the mixture having an X-ray diffraction spectrum having a ratio between a peak height a and a peak height b a/b of 0.2 or more and 10.0 or less as being measured, the peak height a being highest in a range of 2θ of 24° or more and less than 28°, and the peak height b being highest in a range of 2θ of 28° or more and less than 30°, and the carbon material being included in an electrode as a working electrode, the working electrode generating a current with a lithium metal as a reference electrode and a counter electrode using an electrolytic solution containing LiPF₆ having a concentration of 1 mol/L and a mixed solution of ethylene carbonate and dimethyl carbonate at a volume ratio of 1 : 2, and the current having an absolute value measured by cyclic voltammetry of 0.001 A/g or more and 0.02 A/g or less at a potential of 4.25 V (vs. Li⁺/Li).

## Description

### TECHNICAL FIELD

The present invention relates to a carbon material including a graphene layered structure, and an electrode for an electricity storage device, an electricity storage device, and a nonaqueous electrolyte secondary battery in which the carbon material is used.

### BACKGROUND ART

Electricity storage devices have been actively researched and developed in recent years for mobile devices, hybrid vehicles, electric vehicles, home electricity storage applications, and the like.

For example, Patent Document 1 below discloses a nonaqueous electrolyte secondary battery including a positive electrode in which an active material layer is provided on a current collector. The active material layer of the positive electrode in the nonaqueous electrolyte secondary battery in Patent Document 1 contains a plurality of active material grains and graphene as a carbon material. In Patent Document 1, it is described that the graphene has an oxygen concentration of 2 at% or more and 20 at% or less.

Patent Document 2 below discloses a lithium ion secondary battery including an electrode including a carbon material and an active material. Patent Document 2 discloses, as an example of the carbon material, a carbon material including a structure in which graphite is partially exfoliated.

### Related Art Documents

### Patent Documents

Patent Document 1: JP 2017-183292 A
Patent Document 2: JP 2017-216254 A

### SUMMARY OF THE INVENTION

### PROBLEMS TO BE SOLVED BY THE INVENTION

However, when the carbon materials described in Patent Documents 1 and 2 are used in an electricity storage device, particularly in a nonaqueous electrolyte secondary battery, a desired cycle characteristic cannot be obtained in some cases.

An object of the present invention is to provide a carbon material that can enhance a battery characteristic represented by the cycle characteristic of an electricity storage device, and an electrode for an electricity storage device, an electricity storage device, and a nonaqueous electrolyte secondary battery in which the carbon material is used.

### MEANS FOR SOLVING THE PROBLEMS

In a broad aspect of the carbon material according to the present invention, the carbon material is a carbon material including a graphene layered structure, the carbon material being mixed with Si at a weight ratio of 1 : 1 to produce a mixture, the mixture having an X-ray diffraction spectrum having a ratio between a peak height a and a peak height b a/b of 0.2 or more and 10.0 or less as being measured, the peak height a being highest in a range of 2θ of 24° or more and less than 28°, and the peak height b being highest in a range of 2θ of 28° or more and less than 30°, and the carbon material being included in an electrode as a working electrode, the working electrode generating a current with a lithium metal as a reference electrode and a counter electrode using an electrolytic solution containing LiPF₆ having a concentration of 1 mol/L and a mixed solution of ethylene carbonate and dimethyl carbonate at a volume ratio of 1 : 2, and the current having an absolute value measured by cyclic voltammetry of 0.001 A/g or more and 0.02 A/g or less at a potential of 4.25 V (vs. Li⁺/Li).

In another broad aspect of the carbon material according to the present invention, the carbon material is a carbon material including a graphene layered structure, the carbon material being mixed with Si at a weight ratio of 1 : 1 to produce a mixture, the mixture having an X-ray diffraction spectrum having a ratio between a peak height a and a peak height b a/b of 0.2 or more and 10.0 or less as being measured, the peak height a being highest in a range of 2θ of 24° or more and less than 28°, and the peak height b being highest in a range of 2θ of 28° or more and less than 30°, and the carbon material having a number ratio of carbon atoms to oxygen atoms (C/O ratio) measured by elemental analysis of 20 or more and 200 or less.

In a specific aspect of the carbon material according to the present invention, the carbon material is exfoliated graphite.

In another specific aspect of the carbon material according to the present invention, the carbon material is used in an electrode for an electricity storage device.

The electrode for an electricity storage device according to the present invention includes the carbon material configured according to the present invention.

The electricity storage device according to the present invention includes an electrode for an electricity storage device, the electrode configured according to the present invention.

The nonaqueous electrolyte secondary battery according to the present invention includes an electrode for an electricity storage device, the electrode configured according to the present invention, and a nonaqueous electrolyte.

In a specific aspect of the nonaqueous electrolyte secondary battery according to the present invention, the nonaqueous electrolyte contains an electrolytic solution of a solute dissolved in a nonaqueous solvent and contains a compound that reacts at 0.0 V or more and 2.0 V or less with respect to Li/Li⁺, and a content of the compound is 0.01% by weight or more and 10% by weight or less based on 100% by weight of the nonaqueous electrolyte.

In another specific aspect of the nonaqueous electrolyte secondary battery according to the present invention, the nonaqueous electrolyte contains an electrolytic solution of a solute dissolved in a nonaqueous solvent and contains a compound that reacts at 2.0 V or more and 5.0 V or less with respect to Li/Li⁺, and a content of the compound is 0.01% by weight or more and 10% by weight or less based on 100% by weight of the nonaqueous electrolyte.

### EFFECT OF THE INVENTION

According to the present invention, it is possible to provide a carbon material that can enhance a battery characteristic represented by the cycle characteristic of an electricity storage device, and an electrode for an electricity storage device, an electricity storage device, and a nonaqueous electrolyte secondary battery in which the carbon material is used.

### MODES FOR CARRYING OUT THE INVENTION

Hereinafter, details of the present invention will be described.

The electricity storage device according to the present invention is not particularly limited, and examples of the electricity storage device include nonaqueous electrolyte primary batteries, aqueous electrolyte primary batteries, nonaqueous electrolyte secondary batteries, aqueous electrolyte secondary batteries, all solid electrolyte primary batteries, all solid electrolyte secondary batteries, capacitors, electric double layer capacitors, and lithium ion capacitors. The carbon material according to the present invention is an electrode material included in an electrode for such an electricity storage device as is described above. Furthermore, the electrode for an electricity storage device according to the present invention is an electrode used in such an electricity storage device as is described above.

### [Carbon material]

The carbon material according to the present invention is included in an electrode for an electricity storage device. The carbon material includes a carbon material including a graphene layered structure. When the X-ray diffraction spectrum is measured of a mixture of the carbon material with Si at a weight ratio of 1 : 1, the X-ray diffraction spectrum has a ratio between the peak height a and the peak height b a/b of 0.2 or more and 10.0 or less, wherein the peak height a is the highest peak in the range of 2θ of 24° or more and less than 28°, and the peak height b is the highest peak in the range of 2θ of 28° or more and less than 30°.

In a first invention, the current at a potential of 4.25 V (vs. Li⁺/Li) measured by cyclic voltammetry using an electrode including the carbon material as a working electrode has an absolute value of 0.001 A/g or more and 0.02 A/g or less.

The present inventors have found that the value of the current at a potential of 4.25 V (vs. Li⁺/Li) measured by cyclic voltammetry correlates with the reactivity between the carbon material and the electrolytic solution. That is, it has been found that when the value of the current at a potential of 4.25 V (vs. Li⁺/Li) measured by cyclic voltammetry is set within the above-mentioned range, the reactivity between the carbon material and the electrolytic solution can be reduced and as a result, a battery characteristic of the electricity storage device represented by the cycle characteristic can be enhanced.

In a second invention, the carbon material has a number ratio of carbon atoms to oxygen atoms (C/O ratio) measured by elemental analysis of 20 or more and 200 or less. When the C/O ratio is equal to or more than the above-mentioned lower limit, the reactivity between the carbon material and the electrolytic solution can be reduced. It is considered that this is because the amount of the oxygen atoms contained in the electrode is reduced to further suppress the reaction with the electrolytic solution. Furthermore, it is considered that the reaction product is reduced to further reduce the adverse effect on the counter electrode. As a result, it is considered that a battery characteristic represented by the cycle characteristic can be further enhanced. When the C/O ratio is the above-mentioned upper limit or less, an electronic conduction path can be easily formed and the rate characteristic can be enhanced.

In the present invention, examples of the carbon material including a graphene layered structure include graphite and exfoliated graphite.

The graphite is a laminate of a plurality of graphene sheets. The number of the stacked graphene sheets in the graphite is usually about 100,000 to 1,000,000. As the graphite, for example, natural graphite, artificial graphite, or expanded graphite can be used. The expanded graphite is preferable because of its high proportion of the interlayer distance between the graphene layers that is larger than that in normal graphite and the possibility of keeping the further enhanced liquid retaining property of the electrolytic solution.

The exfoliated graphite is produced by exfoliating the original graphite, and the word "exfoliated graphite" refers to a graphene sheet laminate thinner than the original graphite. The number of the stacked graphene sheets in the exfoliated graphite is required to be smaller than that of the original graphite. The exfoliated graphite may be oxidized exfoliated graphite.

In the exfoliated graphite, the number of the stacked graphene sheets is not particularly limited, and is preferably 2 or more and more preferably 5 or more, and preferably 1,000 or less and more preferably 500 or less. When the number of the stacked graphene sheets is equal to or more than the above-mentioned lower limit, the conductivity of the exfoliated graphite can be further enhanced. When the number of the stacked graphene sheets is the above-mentioned upper limit or less, the specific surface area of the exfoliated graphite can be further increased.

It is preferable that the exfoliated graphite be partially exfoliated graphite having a structure in which graphite is partially exfoliated.

In an example of the structure in which "graphite is partially exfoliated", a graphene laminate has graphene layers separated in the range from the edge to the inside to some extent, that is, a part of the graphite is exfoliated at the edge, and in the central portion, the graphite layers are stacked in the same manner as in the original graphite or the primary exfoliated graphite. Therefore, the portion where a part of the graphite is exfoliated at the edge leads to the central portion. Furthermore, the partially exfoliated graphite may include exfoliated graphite whose edge is exfoliated.

In the central portion of the partially exfoliated graphite, the graphite layers are stacked in the same manner as in the original graphite or the primary exfoliated graphite. Therefore, in the partially exfoliated graphite, the degree of graphitization is higher than that in conventional graphene oxides and carbon blacks, and the conductivity is excellent. Furthermore, since the partially exfoliated graphite has a structure in which graphite is partially exfoliated, the specific surface area is large. As a result, the area of a portion in contact with the active material can be increased. Therefore, when the material of the electrode for an electricity storage device includes partially exfoliated graphite and is used in an electrode of an electricity storage device such as a secondary battery, the resistance of the electricity storage device can be further reduced, so that the heat generation during the charging and discharging at a high current can be further suppressed.

For the production of the partially exfoliated graphite, for example, a composition containing graphite or primary exfoliated graphite and a resin that is fixed to the graphite or the primary exfoliated graphite by grafting or adsorption is prepared, and the resin contained in the composition is thermally decomposed to obtain the partially exfoliated graphite. The resin may be thermally decomposed while a part of the resin is left undecomposed, or the resin may be completely thermally decomposed.

The partially exfoliated graphite can be produced, for example, by the same method as the method for producing the exfoliated graphite/resin composite material described in WO 2014/034156. As the graphite, the expanded graphite is preferably used because the graphite of the expanded graphite can be further easily exfoliated.

Examples of the primary exfoliated graphite widely include exfoliated graphite produced by exfoliating graphite by various methods. The primary exfoliated graphite may be partially exfoliated graphite. Since the primary exfoliated graphite is produced by exfoliating graphite, the specific surface area of the exfoliated graphite is required to be larger than that of graphite.

The heating temperature in the thermal decomposition of the resin is depending on the type of the resin and not particularly limited, and can be, for example, 250°C to 1,000°C. The heating time can be, for example, 20 minutes to 5 hours. The heating may be performed in the air or in an atmosphere of an inert gas such as nitrogen gas. However, from the viewpoint of further reducing the reactivity between the carbon material and the electrolytic solution, it is desirable that the heating be performed in an atmosphere of an inert gas such as nitrogen gas.

The resin is not particularly limited, and is preferably a polymer of a radically polymerizable monomer. In this case, the resin may be a homopolymer of one radically polymerizable monomer, or a copolymer of a plurality of radically polymerizable monomers. The radically polymerizable monomer is not particularly limited as long as it is a monomer having a radically polymerizable functional group.

Examples of the radically polymerizable monomer include styrene, α-substituted acrylate esters such as methyl α-ethyl acrylate, methyl α-benzyl acrylate, methyl α-[2,2-bis(carbomethoxy)ethyl]acrylate, dibutyl itaconate, dimethyl itaconate, dicyclohexyl itaconate, α-methylene-δ-valerolactone, α-methylstyrene, and α-acetoxystyrene, vinyl monomers having a glycidyl group or a hydroxyl group such as glycidyl methacrylate, 3,4-epoxycyclohexylmethyl methacrylate, hydroxyethyl methacrylate, hydroxyethyl acrylate, hydroxypropyl acrylate, and 4-hydroxybutyl methacrylate; vinyl monomers having an amino group such as allylamine, diethylaminoethyl (meth)acrylate, and dimethylaminoethyl (meth)acrylate, monomers having a carboxyl group such as methacrylic acid, maleic anhydride, maleic acid, itaconic acid, acrylic acid, crotonic acid, 2-acryloyloxyethyl succinate, 2-methacryloyloxyethyl succinate, and 2-methacryloyloxyethyl phthalate; monomers having a phosphate group manufactured by Unichemical Co., Ltd. such as Phosmer (registered trademark) M, Phosmer (registered trademark) CL, Phosmer (registered trademark) PE, Phosmer (registered trademark) MH, and Phosmer (registered trademark) PP; monomers having an alkoxysilyl group such as vinyltrimethoxysilane and 3-methacryloxypropyltrimethoxysilane; and (meth)acrylate-based monomers having an alkyl group, a benzyl group, or the like.

Examples of the resin used include polyethylene glycol, polypropylene glycol, polyglycidyl methacrylate, polyvinyl acetate, polyvinyl butyral (butyral resin), poly(meth)acrylate, and polystyrene.

Among the above-mentioned resins, polyethylene glycol, polypropylene glycol, and polyvinyl acetate can be preferably used. When polyethylene glycol, polypropylene glycol, or polyvinyl acetate is used, the specific surface area of the partially exfoliated graphite can be further increased. The type of the resin can be appropriately selected in consideration of the affinity with the solvent used.

The amount of the resin fixed to the graphite or the primary exfoliated graphite before the thermal decomposition is preferably 0.1 parts by weight or more and more preferably 0.5 parts by weight or more, and preferably 3,000 parts by weight or less and more preferably 1,000 parts by weight or less based on 100 parts by weight of the graphite or the primary exfoliated graphite excluding the resin component. When the amount of the resin before the thermal decomposition is within the above-mentioned range, the content of the residual resin after the thermal decomposition is further easily controlled. When the amount of the resin before the thermal decomposition is the above-mentioned upper limit or less, the advantage is further increased in terms of cost.

The amount of the residual resin after the thermal decomposition is preferably 0% by weight or more and 30% by weight or less, more preferably 0.5% by weight or more and 25% by weight or less, and still more preferably 1.0% by weight or more and 20% by weight or less based on 100% by weight of the partially exfoliated graphite including the resin component. When the amount of the residual resin is equal to or more than the above-mentioned lower limit, the amount of the binder resin to be added at the time of preparing the electrode can be further reduced. When the amount of the residual resin is the above-mentioned upper limit or less, the reactivity between the carbon material and the electrolytic solution can be further reduced.

The amount of the resin before the thermal decomposition and the amount of the residual resin remaining in the partially exfoliated graphite can be calculated by, for example, a thermogravimetric analysis (hereinafter, referred to as TG) in which the weight change due to the heating temperature is measured.

When a composite with a positive electrode active material described below is prepared, the amount of the resin may be reduced or the resin may be removed after preparing the composite with the positive electrode active material.

As a method of reducing the amount of the resin or removing the resin, a method is preferable in which the resin is heat-treated at the decomposition temperature of the resin or higher and lower than the decomposition temperature of the positive electrode active material. The heat treatment may be performed in any of the air, an inert gas atmosphere, a low oxygen atmosphere, or a vacuum.

In the present invention, when the X-ray diffraction spectrum is measured of the mixture of the carbon material with Si at a weight ratio of 1 : 1, the X-ray diffraction spectrum has a peak ratio a/b of 0.2 or more, preferably 0.22 or more, and more preferably 0.25 or more. The peak ratio a/b is 10.0 or less, preferably 8.0 or less, and more preferably 5.0 or less. The above-mentioned "a" is the height of the highest peak in the range of 2θ of 24° or more and less than 28°. The above-mentioned "b" is the height of the highest peak in the range of 2θ of 28° or more and less than 30°. As Si, for example, silicon powder having a diameter of ϕ = 100 nm or less can be used.

The X-ray diffraction spectrum can be measured by a wide-angle X-ray diffraction method. As the X-ray, a CuKα ray (wavelength: 1.541 Å) can be used. As the X-ray diffractometer, for example, SmartLab (manufactured by Rigaku Corporation) can be used.

In the X-ray diffraction spectrum, the peak derived from a graphene layered structure represented by a graphite structure appears in the vicinity of 2θ = 26.4°. The peak derived from Si such as silicon powder appears in the vicinity of 2θ = 28.5°. Therefore, the ratio a/b can be determined as the peak ratio between the peak in the vicinity of 2θ = 26.4° and the peak in the vicinity of 2θ = 28.5° ("the peak in the vicinity of 2θ = 26.4°"/"the peak in the vicinity of 2θ = 28.5°").

When a/b described above is too small, the carbon material itself has an immaturely formed graphite structure, low electron conductivity, and a defect, so that the resistance values of the positive electrode and the negative electrode are increased and the battery characteristic is deteriorated in some cases.

When a/b described above is too large, the carbon material itself is rigid and difficult to disperse in the positive electrode and the negative electrode of the electricity storage device, and a favorable electronic conduction path is hardly formed in some cases.

When the carbon material is the partially exfoliated graphite, a/b described above can be adjusted by the heating condition of the thermal decomposition at the time of manufacturing the partially exfoliated graphite or by the amount of the resin fixed to the graphite or the primary exfoliated graphite before the thermal decomposition. For example, when the heating temperature or the heating time is increased, a/b can be reduced. When the amount of the resin fixed to the graphite or the primary exfoliated graphite before the thermal decomposition is reduced, a/b can be reduced.

The current has an absolute value of 0.001 A/g or more and 0.02 A/g or less at a potential of 4.25 V (vs. Li⁺/Li) during the sweep to higher potential measured by cyclic voltammetry using an electrode including the carbon material according to the first invention as a working electrode. The absolute value of the current is preferably 0.003 A/g or more and more preferably 0.005 A/g or more, and preferably 0.019 A/g or less and more preferably 0.018 A/g or less.

In the cyclic voltammetry, an electrode including the carbon material according to the present invention is used as a working electrode. An electrode including a lithium metal is used as a reference electrode and a counter electrode. Furthermore, an electrolytic solution is used containing LiPF₆ having a concentration of 1 mol/L and a mixed solution of ethylene carbonate (EC) and dimethyl carbonate (DMC) at a volume ratio of 1 : 2.

When the absolute value of the current at a potential of 4.25 V (vs. Li⁺/Li) measured by cyclic voltammetry in such a manner is equal to or more than the above-mentioned lower limit, the electronic conduction path can be further easily formed, and the rate characteristic can be further enhanced. When the absolute value of the current is the above-mentioned upper limit or less, the reactivity between the carbon material and the electrolytic solution can be further reduced, and a battery characteristic represented by the cycle characteristic can be further enhanced.

The absolute value of the current can be adjusted by adjusting the amount of the resin, changing the heating condition, or performing the heating during the thermal decomposition in an inert gas atmosphere. Specifically, for example, when the carbon material is the partially exfoliated graphite, the absolute value of the current can be reduced by reducing the amount of the resin fixed to the graphite or the primary exfoliated graphite before the thermal decomposition. Furthermore, the absolute value of the current can be reduced by increasing the concentration of the inert gas and reducing the concentration of the oxygen in the heating during the thermal decomposition.

In the second invention, the carbon material has a number ratio of carbon atoms to oxygen atoms (C/O ratio) measured by elemental analysis of 20 or more and 200 or less. From the viewpoints of further reducing the reactivity between the carbon material and the electrolytic solution and further improving the cycle characteristic, the C/O ratio is more preferably 22 or more and still more preferably 25 or more, and more preferably 180 or less and still more preferably 160 or less.

The C/O ratio can be measured, for example, by X-ray photoelectron spectroscopy (XPS). Specifically, the photoelectron spectrum is measured under the conditions of an X-ray source: AlKα, a photoelectron take-off angle: 45 degrees, and an X-ray beam diameter of 200 µm (50 W, 15 kV) . Then, the peak area of the C1s spectrum appearing at Binding Energy: 280 eV to 292 eV is divided by the peak area of the O1s spectrum appearing at Binding Energy: 525 eV to 540 eV. As a result, the number ratio of the carbon atoms to the oxygen atoms contained in the carbon material (C/O ratio) can be calculated. The C/O ratio can be adjusted by adjusting the amount of the resin, changing the heating condition, or performing the heating during the thermal decomposition in an inert gas atmosphere. Specifically, for example, when the carbon material is the partially exfoliated graphite, the C/O ratio can be increased by reducing the amount of the resin fixed to the graphite or the primary exfoliated graphite before the thermal decomposition. Furthermore, the C/O ratio can be increased by increasing the concentration of the inert gas and reducing the concentration of the oxygen in the heating during the thermal decomposition.

The BET specific surface area of the carbon material according to the present invention is not particularly limited, and is preferably 10 m²/g or more and more preferably 15 m²/g or more, and preferably 200 m²/g or less and more preferably 160 m²/g or less. When the BET specific surface area of the carbon material is equal to or more than the above-mentioned lower limit, the liquid retaining property of the electrolytic solution can be further enhanced, and a battery characteristic such as the capacity of the electricity storage device can be further enhanced. When the BET specific surface area of the carbon material is the above-mentioned upper limit or less, the application property in forming the electrode by applying a slurry containing the carbon material on a current collector can be further enhanced. Furthermore, the conductivity can be further enhanced. In addition, because the reaction field between the carbon material and the electrolytic solution is reduced, the deterioration of the electrolytic solution can be further suppressed.

The BET specific surface area of the carbon material according to the present invention can be measured from a nitrogen adsorption isotherm in accordance with the BET method. As the measuring device, for example, a device with a product number "ASAP-2000" manufactured by SHIMADZU CORPORATION can be used.

### [Electrode for electricity storage device]

The carbon material according to the present invention can be used in an electrode for an electricity storage device, that is, a positive electrode and/or a negative electrode of an electricity storage device. In particular, when the carbon material is used as a conductive auxiliary for a positive electrode of a nonaqueous electrolyte secondary battery, especially a lithium ion secondary battery, the cycle characteristic can be further improved, so that the carbon material can be suitably used as a conductive auxiliary for the positive electrode. In this case, because the conductivity of the positive electrode can be further increased by using the carbon material according to the present invention, the content of the conductive auxiliary in the positive electrode can be reduced. As a result, the content of the positive electrode active material can be further increased, and the energy density of the electricity storage device can be further increased.

As the positive electrode, a positive electrode may be used that has a general positive electrode configuration and a general composition and is produced by a general method for manufacturing, or a composite may be used of a positive electrode active material and the carbon material according to the present invention. When the electrode for an electricity storage device is a negative electrode, it is possible to use, for example, natural graphite, artificial graphite, hard carbon, a metal oxide, lithium titanate, or a silicon-based active material as the negative electrode active material.

The content of the carbon material is preferably 0.1% by weight or more, more preferably 0.2% by weight or more, and still more preferably 0.4% by weight or more, and preferably 10% by weight or less, more preferably 8% by weight or less, and still more preferably 5% by weight or less based on 100% by weight of the electrode for an electricity storage device. When the content of the carbon material is within the above-mentioned range, the content of the active material can be further increased, and the energy density of the electricity storage device can be further increased.

When the carbon material according to the present invention is a first carbon material (simply referred to as a carbon material unless otherwise specified), the electrode for an electricity storage device according to the present invention may additively include a second carbon material different from the first carbon material.

The second carbon material is not particularly limited, and examples of the second carbon material include graphene, artificial graphite, granular graphite compounds, fibrous graphite compounds, carbon blacks, and activated carbon.

Hereinafter, a positive electrode for a secondary battery as an example of the electrode for an electricity storage device according to the present invention will be described. Even when the electrode for an electricity storage device is a negative electrode for a secondary battery, the same binder or the like can be used.

The potential of the positive electrode active material used in the electrode for an electricity storage device according to the present invention is required to be higher than the battery reaction potential of the negative electrode active material. In this case, the battery reaction is required to involve an ion of the group 1 or the group 2. Examples of the ion include an H ion, a Li ion, a Na ion, a K ion, a Mg ion, a Ca ion, and an Al ion. Hereinafter, a system in which a Li ion is involved in the battery reaction will be exemplified in detail.

In this case, examples of the positive electrode active material include lithium metal oxides, lithium sulfide, and sulfur.

Examples of the lithium metal oxides include those having a spinel structure, a layered rock salt structure, or an olivine structure, and mixtures thereof.

Examples of the lithium metal oxides having a spinel structure include lithium manganate.

Examples of the lithium metal oxides having a layered rock salt structure include lithium cobaltate, lithium nickelate, and a ternary system.

Examples of the lithium metal oxides having an olivine structure include lithium iron phosphate, lithium ferromanganese phosphate, and lithium manganese phosphate.

The positive electrode active material may contain a so-called doping element. The positive electrode active material may be used alone or two or more positive electrode active materials may be used in combination.

The positive electrode may only include the positive electrode active material and the carbon material, and, may additively include a binder from the viewpoint of further easily forming the positive electrode.

The binder is not particularly limited, and it is possible to use, for example, at least one resin selected from the group consisting of polyvinylidene fluoride (PVdF), polytetrafluoroethylene (PTFE), styrene-butadiene rubber, polyimides, and derivatives thereof.

The binder is preferably dissolved or dispersed in a nonaqueous solvent or water from the viewpoint of further easily preparing a positive electrode for a secondary battery.

The nonaqueous solvent is not particularly limited, and examples of the nonaqueous solvent include N-methyl-2-pyrrolidone (NMP), dimethylformamide, dimethylacetamide, methyl ethyl ketone, methyl acetate, ethyl acetate, and tetrahydrofuran. A dispersant and a thickener may be added to the nonaqueous solvent.

The amount of the binder contained in the positive electrode for a secondary battery is preferably 0.3 parts by weight or more and 30 parts by weight or less, and more preferably 0.5 parts by weight or more and 15 parts by weight or less based on 100 parts by weight of the positive electrode active material. When the amount of the binder is within the above-mentioned range, the bondability between the positive electrode active material and the carbon material can be maintained, and the bondability with a current collector can be further enhanced.

Examples of the method for preparing the positive electrode for a secondary battery include a method in which a mixture of the positive electrode active material, the carbon material, and the binder is formed on a current collector.

From the viewpoint of the further easy preparation, the positive electrode for a secondary battery is preferably prepared as described below. First, to the positive electrode active material and the carbon material, a binder solution or a dispersing liquid is added and mixed to prepare a slurry. Next, the prepared slurry is applied to a current collector, and finally, the solvent is removed to prepare a positive electrode for a secondary battery.

As the method for preparing the slurry, a conventional method can be used. Examples of the method include a method in which a mixer or the like is used for mixing. The mixer used for the mixing is not particularly limited, and examples of the mixer include planetary mixers, dispersers, thin-film spin mixers, jet mixers, and rotation/revolution mixers.

From the viewpoint of the further easy application, the solid content concentration of the slurry is preferably 30% by weight or more and 95% by weight or less. From the viewpoint of further enhancing the storage stability, the solid content concentration of the slurry is more preferably 35% by weight or more and 90% by weight or less. Furthermore, from the viewpoint of further suppressing the production cost, the solid content concentration of the slurry is more preferably 40% by weight or more and 85% by weight or less.

The solid content concentration can be controlled with a diluting solvent. As the diluting solvent, it is preferable to use the same solvent as the binder solution or the dispersing liquid. Another solvent may be used as long as the solvent is compatible.

The current collector used in the positive electrode for a secondary battery is preferably aluminum or an alloy containing aluminum. Since stable under the positive electrode reaction atmosphere, aluminum is not particularly limited and is preferably high-purity aluminum represented by JIS standards 1030, 1050, 1085, 1N90, 1N99, and the like.

The thickness of the current collector is not particularly limited, and is preferably 10 µm or more and 100 µm or less. When the thickness of the current collector is less than 10 µm, the current collector is sometimes difficult to handle from the viewpoint of the preparation. When the thickness of the current collector is more than 100 µm, the current collector is sometimes disadvantageous from the viewpoint of economy.

The current collector may be one in which the surface of a metal other than aluminum (copper, SUS, nickel, titanium, or an alloy thereof) is coated with aluminum.

The method of applying the slurry to the current collector is not particularly limited, and examples of the method include a method in which the slurry is applied with a doctor blade, a die coater, a comma coater, or the like and then the solvent is removed, a method in which the slurry is applied by spraying and then the solvent is removed, and a method in which the slurry is applied by screen printing and then the solvent is removed.

The method of removing the solvent is preferably a method of drying in which a blow oven or a vacuum oven is used from the viewpoint of the simplicity. Examples of the atmosphere in which the solvent is removed include an air atmosphere, an inert gas atmosphere, and a vacuum state. The temperature at which the solvent is removed is not particularly limited, and is preferably 60°C or more and 250°C or less. When the temperature at which the solvent is removed is less than 60°C, the removal of the solvent sometimes takes time. When the temperature at which the solvent is removed is more than 250°C, the binder sometimes deteriorates.

The positive electrode for a secondary battery may be compressed to a desired thickness and density. The compression is not particularly limited, and can be performed using, for example, a roll press, a hydraulic press, or the like.

The thickness of the positive electrode for a secondary battery after the compression is not particularly limited, and is preferably 10 µm or more and 1,000 µm or less. When the thickness is less than 10 µm, it is sometimes difficult to obtain a desired capacity. When the thickness is more than 1,000 µm, it is sometimes difficult to obtain a desired output density.

The positive electrode for a secondary battery preferably has an electric capacity per 1 cm² of the positive electrode of 0.5 mAh or more and 10.0 mAh or less. When the electric capacity is less than 0.5 mAh, the size of the battery having a desired capacity is sometimes increased. When the electric capacity is more than 10.0 mAh, it is sometimes difficult to obtain a desired output density. The electric capacity per 1 cm² of the positive electrode may be calculated by measurement in which a positive electrode for a secondary battery is prepared and then a half-cell with a lithium metal as a counter electrode is prepared to measure the charge/discharge characteristic.

The electric capacity per 1 cm² of the positive electrode of the positive electrode for a secondary battery is not particularly limited, and can be controlled by the weight of the positive electrode formed per unit area of the current collector. For example, the electric capacity can be controlled by the application thickness at the time of applying the slurry described above.

As the positive electrode, a composite may be used of a positive electrode active material and the carbon material. The positive electrode active material-carbon material composite is prepared, for example, by the following procedure.

First, a dispersing liquid of the carbon material in which the carbon material is dispersed in a solvent (hereinafter, referred to as a dispersing liquid 1 of the carbon material) is prepared. Next, a dispersing liquid of a positive electrode active material in which the positive electrode active material is dispersed in a solvent (hereinafter, referred to as a dispersing liquid 2 of the positive electrode active material) is prepared other than the dispersing liquid 1.

Next, the dispersing liquid 1 of the carbon material and the dispersing liquid 2 of the positive electrode active material are mixed. Finally, the solvent in the dispersing liquid containing the carbon material and the positive electrode active material is removed to prepare a composite of the positive electrode active material and the carbon material used in an electrode for an electricity storage device (active material-carbon material composite).

In addition to the method for preparing described above, examples of the method include a method in which the order of the mixing is changed, a method in which the dispersing liquid 1 or 2 is not a dispersing liquid but a dry dispersion, and a method in which only dry dispersions are mixed. Furthermore, examples of the method include a method in which a mixture of the carbon material, the positive electrode active material, and a solvent is mixed with a mixer, that is, a method in which both the slurry of the positive electrode described below and the composite are prepared.

The solvent in which the positive electrode active material and the carbon material are dispersed may be any of an aqueous solvent, a nonaqueous solvent, a mixed solvent of an aqueous solvent and a nonaqueous solvent, or a mixed solvent of different nonaqueous solvents. The solvent in which the carbon material is dispersed and the solvent in which the positive electrode active material is dispersed may be the same or different. When different, the solvents are preferably compatible with each other.

The nonaqueous solvent is not particularly limited, and from the viewpoint of, for example, ease of dispersion, it is possible to use an alcohol solvent represented by methanol, ethanol, or propanol, or a nonaqueous solvent such as tetrahydrofuran or N-methyl-2-pyrrolidone. In order to further improve the dispersibility, the solvent may contain a dispersant such as a surfactant.

The method of dispersion is not particularly limited, and examples of the method include methods of dispersion by an ultrasonic wave, dispersion by a mixer, dispersion by a jet mill, and dispersion by a stirrer.

The solid content concentration of the dispersing liquid of the carbon material is not particularly limited, and the weight of the solvent is preferably 0.5 or more and 1,000 or less when the weight of the carbon material is set to 1. From the viewpoint of further enhancing the handleability, the weight of the solvent is more preferably 1 or more and 750 or less when the weight of the carbon material is set to 1. From the viewpoint of further enhancing the dispersibility, the weight of the solvent is still more preferably 2 or more and 500 or less when the weight of the carbon material is set to 1.

When the weight of the solvent is less than the above-mentioned lower limit, it is sometimes impossible to disperse the carbon material to a desired dispersion state. When the weight of the solvent is more than the above-mentioned upper limit, the production cost is sometimes increased.

The solid content concentration of the dispersing liquid of the positive electrode active material is not particularly limited, and the weight of the solvent is preferably 0.5 or more and 100 or less when the weight of the positive electrode active material is set to 1. From the viewpoint of further enhancing the handleability, the weight of the solvent is more preferably 1 or more and 75 or less. From the viewpoint of further enhancing the dispersibility, the weight of the solvent is still more preferably 5 or more and 50 or less. When the weight of the solvent is less than the above-mentioned lower limit, it is sometimes impossible to disperse the positive electrode active material to a desired dispersion state. When the weight of the solvent is more than the above-mentioned upper limit, the production cost is sometimes increased.

The method of mixing the dispersing liquid of the positive electrode active material and the dispersing liquid of the carbon material is not particularly limited, and examples of the method include a method in which the dispersing liquids are mixed at once and a method in which one dispersing liquid is added to the other dispersing liquid in several times.

Examples of the method in which one dispersing liquid is added to the other dispersing liquid in several times include a method in which a dropping tool such as a spuit is used for dropping, a method in which a pump is used, and a method in which a dispenser is used.

The method of removing the solvent from the mixture of the carbon material, the positive electrode active material, and the solvent is not particularly limited, and examples of the method include a method in which the solvent is removed by filtration and then the resulting mixture is dried with an oven or the like. The filtration is preferably suction filtration from the viewpoint of further enhancing the productivity. The method for the drying is preferably a method in which the mixture is dried with a blow oven and then dried in a vacuum, because the solvent remaining in the pore can be removed.

The active material-carbon material composite preferably has a weight ratio of the carbon material to 100% by weight of the positive electrode active material of 0.2% by weight or more and 10.0% by weight or less. From the viewpoint of further improving the rate characteristic, the weight of the carbon material is more preferably 0.3% by weight or more and 8.0% by weight or less. From the viewpoint of further improving the cycle characteristic, the weight of the carbon material is more preferably 0.5% by weight or more and 7.0% by weight or less.

### [Electricity storage device]

The electricity storage device according to the present invention includes an electrode for an electricity storage device, the electrode according to the present invention. Therefore, the reactivity between the carbon material and the electrolytic solution can be reduced, and a battery characteristic represented by the cycle characteristic of the electricity storage device can be enhanced.

As described above, the electricity storage device according to the present invention is not particularly limited, and examples of the electricity storage device include nonaqueous electrolyte primary batteries, aqueous electrolyte primary batteries, nonaqueous electrolyte secondary batteries, aqueous electrolyte secondary batteries, all solid electrolyte primary batteries, all solid electrolyte secondary batteries, capacitors, electric double layer capacitors, and lithium ion capacitors.

The secondary battery as an example of the electricity storage device according to the present invention is required to be a secondary battery in which a compound is used that undergoes an insertion reaction and a desorption reaction of an alkali metal ion or an alkaline earth metal ion. Examples of the alkali metal ion include a lithium ion, a sodium ion, and a potassium ion. Examples of the alkaline earth metal ion include a calcium ion and a magnesium ion. The present invention has a great effect particularly on a positive electrode of nonaqueous electrolyte secondary batteries, and among them, the present invention can be suitably used for those in which a lithium ion is used. Hereinafter, a nonaqueous electrolyte secondary battery in which a lithium ion is used (hereinafter, referred to as a lithium ion secondary battery) will be exemplified.

The positive electrode and the negative electrode of the nonaqueous electrolyte secondary battery may have a form in which the same electrodes are formed on both sides of the current collector, or may have a form in which the positive electrode is formed on one side of the current collector and the negative electrode is formed on the other side, that is, may be a bipolar electrode.

The nonaqueous electrolyte secondary battery may be a wound laminate of the positive electrode and the negative electrode with a separator interposed therebetween or stacked laminates. The positive electrode, the negative electrode, and the separator contain a nonaqueous electrolyte that serves lithium ion conduction.

After the winding of the laminate or the stacking of the laminates, an exterior that is a laminate film or is a metal can having a square shape, an ellipse shape, a cylindrical shape, a coin shape, a button shape, or a sheet shape may be set on the nonaqueous electrolyte secondary battery. The exterior may have a mechanism for releasing the generated gas. The stacking number of the laminates is not particularly limited, and the laminates can be stacked until a desired voltage value and battery capacity are developed.

The nonaqueous electrolyte secondary battery can be an assembled battery in which batteries are appropriately connected in series or parallel depending on the desired size, capacity, and voltage. It is preferable that a control circuit is attached to the assembled battery in order to confirm the state of charge of each battery and improve the safety.

The nonaqueous electrolyte used in the nonaqueous electrolyte secondary battery is not particularly limited, and for example, an electrolytic solution of a solute dissolved in a nonaqueous solvent can be used. In addition, a gel electrolyte in which a polymer is impregnated with the electrolytic solution of a solute dissolved in a nonaqueous solvent, a polymer solid electrolyte such as polyethylene oxide or polypropylene oxide, or an inorganic solid electrolyte such as sulfide glass or oxynitride may be used.

The nonaqueous solvent preferably contains a cyclic aprotic solvent and/or a chain aprotic solvent because the solute described below is further easily dissolved.

Examples of the cyclic aprotic solvent include cyclic carbonates, cyclic esters, cyclic sulfones, and cyclic ethers.

Examples of the chain aprotic solvent include chain carbonates, chain carboxylates, and chain ethers.

In addition, a solvent, such as acetonitrile, generally used as a solvent for a nonaqueous electrolyte may be used. More specifically, dimethyl carbonate, methyl ethyl carbonate, dimethyl carbonate, dipropyl carbonate, methyl propyl carbonate, ethylene carbonate, propylene carbonate, butylene carbonate, γ-butyrolactone, 1,2-dimethoxyethane, sulfolane, dioxolane, or methyl propionate can be used. The solvent may be used alone, or the two or more solvents may be mixed and used. It is preferable to use a solvent in which the two or more solvents are mixed from the viewpoints of further easily dissolving the solute described below and further enhancing the conductivity of a lithium ion.

The solute is not particularly limited, and LiClO₄, LiBF₄, LiPF₆, LiAsF₆, LiCF₃SO₃, LiBOB (Lithium Bis (Oxalato) Borate), or LiN (SO₂CF₃)₂ is preferably used. In this case, the solute can be further easily dissolved in the nonaqueous solvent.

The electrolytic solution preferably contains the solute at a concentration of 0.5 mol/L or more and 2.0 mol/L or less. When the concentration of the solute is less than 0.5 mol/L, the desired lithium ion conductivity is not exhibited in some cases. When the concentration of the solute is more than 2.0 mol/L, the solute is not dissolved no further in some cases.

Furthermore, the nonaqueous electrolyte preferably contains the above-mentioned electrolytic solution of a solute dissolved in a nonaqueous solvent and contains a compound that reacts at 0.0 V or more and 2.0 V or less with respect to Li/Li⁺. In this case, a protective film can be formed on the surface of the negative electrode, so that the intrusion of a substance that inhibits a charge/discharge reaction into the negative electrode can be further suppressed. Therefore, the reaction between the electrolytic solution and the electrode material included in the negative electrode can be further suppressed, so that the deterioration of a battery characteristic represented by the cycle characteristic of the nonaqueous electrolyte secondary battery can be further suppressed. As described above, the compound that reacts at 0.0 V or more and 2.0 V or less with respect to Li/Li⁺ can be used as an additive for forming a negative electrode film.

The content of the compound that reacts at 0.0 V or more and 2.0 V or less with respect to Li/Li⁺ is preferably 0.01% by weight or more and 10% by weight or less based on 100% by weight of the nonaqueous electrolyte. When the content of the compound is within the above-mentioned range, it is possible to further suppress the deterioration of the battery characteristic due to the reaction between the electrolytic solution and the electrode material included in the negative electrode.

The compound that reacts at 0.0 V or more and 2.0 V or less with respect to Li/Li⁺ is not particularly limited, and, for example, vinylene carbonate, fluorinated ethylene carbonate, ethylene sulfite, 1,3-propanesultone, or biphenyl can be used.

Furthermore, the nonaqueous electrolyte preferably contains the electrolytic solution of a solute dissolved in a nonaqueous solvent and contains a compound that reacts at 2.0 V or more and 5.0 V or less with respect to Li/Li⁺. In this case, a protective film can be formed on the surface of the positive electrode, so that the intrusion of a substance that inhibits a charge/discharge reaction into the positive electrode can be further suppressed. Therefore, the reaction between the electrolytic solution and the electrode material included in the positive electrode can be further suppressed, so that the deterioration of a battery characteristic represented by the cycle characteristic of the nonaqueous electrolyte secondary battery can be further suppressed. As described above, the compound that reacts at 2.0 V or more and 5.0 V or less with respect to Li/Li⁺ can be used as an additive for forming a positive electrode film.

The content of the compound that reacts at 2.0 V or more and 5.0 V or less with respect to Li/Li⁺ is preferably 0.01% by weight or more and 10% by weight or less based on 100% by weight of the nonaqueous electrolyte. When the content of the compound is within the above-mentioned range, it is possible to further suppress the deterioration of the battery characteristic due to the reaction between the electrolytic solution and the electrode material included in the positive electrode.

The compound that reacts at 2.0 V or more and 5.0 V or less with respect to Li/Li⁺ is not particularly limited, and, for example, a dinitrile compound such as 1,2-dicyanoethane, a phosphonate ester represented by triethyl phosphonoacetate, or a cyclic acid anhydride represented by succinic anhydride or maleic anhydride can be used.

The compound may be used alone or the two or more compounds may be mixed and used.

The nonaqueous electrolyte may additively contain an additive such as a flame retardant or a stabilizer.

### EXAMPLES

Hereinafter, the present invention will be described more specifically with reference to examples. However, the present invention is not limited to the examples, and can be appropriately modified as long as the gist of the present invention is not changed.

### (Example 1)

Next, 6 g of expanded graphite powder (manufactured by Toyo Tanso Co., Ltd., trade name "PF Powder 8F", BET specific surface area = 22 m²/g, average particle diameter = 10 µm), 0.2 g of carboxymethyl cellulose sodium salt, 200 g of water, and 12 g of polyethylene glycol were mixed with a homomixer for 30 minutes to prepare a raw material composition.

The carboxymethyl cellulose sodium salt manufactured by Sigma-Aldrich Co. LLC. (average molecular weight = 250,000) was used. As the polyethylene glycol, "PG600" (trade name) manufactured by Sanyo Chemical Industries, Ltd. was used. As the homomixer, "T. K. HOMOMIXER MARK II" (model number) manufactured by Tokushu Kika Kogyo Co., Ltd. was used.

Next, the prepared raw material composition was heat-treated at 150°C to remove the water. Then, the composition from which the water had been removed was heat-treated at 370°C for 1 hour to prepare a carbon material in which a part of the polyethylene glycol remained.

Finally, the prepared carbon material was heat-treated at 420°C for 0.5 hours (hereinafter, also referred to as heat treatment A) to obtain a carbon material having a graphite structure in which graphite is partially exfoliated. The obtained carbon material contained 3.0% by weight of resin based on the total weight. As the amount of the resin, the amount of weight loss was calculated in the range of 200°C to 600°C using TG (manufactured by Hitachi High-Tech Science Corporation, product number "STA7300").

### (Example 2)

A carbon material was obtained in the same manner as in Example 1 except that the heating time in the heat treatment A was 3 hours.

### (Example 3)

A carbon material was obtained in the same manner as in Example 1 except that the heating time in the heat treatment A was 2 hours.

### (Example 4)

A carbon material was obtained in the same manner as in Example 1 except that the heating time in the heat treatment A was 1.5 hours.

### (Example 5)

A carbon material was obtained in the same manner as in Example 1 except that the heating time in the heat treatment A was 2.5 hours.

### (Example 6)

A carbon material was obtained in the same manner as in Example 1 except that the heating time in the heat treatment A was 1 hour.

### (Comparative Example 1)

Six grams of expanded graphite powder (manufactured by Toyo Tanso Co., Ltd., trade name "PF Powder 8F", BET specific surface area = 22 m²/g, average particle diameter = 10 µm), 0.2 g of carboxymethyl cellulose sodium salt, 200 g of water, and 120 g of polyethylene glycol were mixed with a homomixer for 30 minutes to prepare a raw material composition.

The carboxymethyl cellulose sodium salt manufactured by Sigma-Aldrich Co. LLC. (average molecular weight = 250,000) was used. As the polyethylene glycol, "PG600" (trade name) manufactured by Sanyo Chemical Industries, Ltd. was used. As the homomixer, "T. K. HOMOMIXER MARK II" (model number) manufactured by Tokushu Kika Kogyo Co., Ltd. was used.

Next, the prepared raw material composition was heat-treated at 150°C to remove the water. Then, the composition from which the water had been removed was heat-treated at 370°C for 1 hour to prepare a carbon material in which a part of the polyethylene glycol remained.

Finally, the prepared carbon material was heat-treated at 420°C for 0.5 hour to obtain a carbon material having a graphite structure in which graphite is partially exfoliated. The carbon material obtained in Comparative Example 1 contained 38.7% by weight of resin based on the total weight.

### (Comparative Example 2)

In Comparative Example 2, a commercially available carbon black (manufactured by Denka Company Limited, trade name "DENKA BLACK") was used as the carbon material.

### (Comparative Example 3)

In Comparative Example 3, commercially available highly oriented pyrolytic graphite (HOPG) was used as the carbon material.

### (Evaluation)

The following evaluations were performed using the carbon materials in Examples 1 to 6 and Comparative Examples 1 to 3. The results are shown in Table 1 below.

Evaluation by X-ray diffraction;
Each of the carbon materials in Examples 1 to 6 and Comparative Examples 1 to 3 and silicon powder (Nano Powder, purity ≥ 98%, particle diameter ≤ 100 nm, manufactured by Sigma-Aldrich Co. LLC.) were put in a sample bottle at a weight ratio of 1 : 1 and mixed to prepare a mixed powder as a measurement sample. The prepared mixed powder was put on a non-reflective Si sample stage, and the stage was set on an X-ray diffractometer (Smart Lab, manufactured by Rigaku Corporation). Then, the X-ray diffraction spectrum was measured by a wide-angle X-ray diffraction method under the conditions of an X-ray source: CuKα (wavelength: 1.541 Å), a measurement range: 3° to 80°, and a scan speed: 5°/min. From the obtained measurement result, the peak height b highest in the range of 2θ = 28° or more and less than 30° was normalized as 1, and the peak height a highest in the range of 2θ = 24° or more and less than 28°C at that time was calculated. Finally, the ratio between a and b, that is, a/b was calculated.

C/O ratio;
Each of the carbon materials in Examples 1 to 6 and Comparative Examples 1 to 3 was put on a sample stage, and the stage was set on an X-ray photoelectron spectroscopy (XPS) measuring device (PHI5000 VersaProbeII). Next, the photoelectron spectrum was measured under the conditions of an X-ray source: AlKα, a photoelectron take-off angle: 45 degrees, and an X-ray beam diameter of 200 µm (50 W, 15 kV) . The peak area of the C1s spectrum appearing at Binding Energy: 280 eV to 292 eV was divided by the peak area of the O1s spectrum appearing at Binding Energy: 525 eV to 540 eV to calculate the number ratio of the carbon atoms to the oxygen atoms contained in the carbon material (C/O ratio).

Evaluation of cyclic voltammetry;
The measurement using a three-electrode cell (HS three-electrode cell, manufactured by Hohsen Corp.) was performed to evaluate the cyclic voltammetry.

A working electrode was prepared in the following procedure. First, each of the carbon materials (4.0 g) in Examples 1 to 6 and Comparative Examples 1 to 3 and polytetrafluoroethylene powder as a binder (PTFE, 6-J, manufactured by Mitsui DuPont Fluoro Chemical Co., Ltd., the same shall apply hereinafter) were mixed in an agate mortar for 5 minutes to prepare a mixed powder. Next, the mixed powder was sandwiched with aluminum foil (thickness 20 µm, single-sided luster, manufactured by UACJ Corporation) and then pressed with a roll press machine (roll gap 100 µm, manufactured by TESTER SANGYO CO., LTD.) to obtain a sheet-shaped mixture. Finally, the sheet-shaped mixture was cut into a size of 10 mmϕ to prepare a working electrode. The working electrode had a weight of 10 mg and a thickness of 100 µm.

The three-electrode cell was prepared as described below.

First, the working electrode was set on the working electrode position of a three-electrode cell (HS three-electrode cell, manufactured by Hohsen Corp.). Next, a separator (polyolefin-based microporous film, 25 µm, 24 mmϕ was set, and a Li metal (16 mmϕ was set as a counter electrode on the counter electrode setting position. Furthermore, a Li metal (inner diameter 16 mmϕ, outer diameter 25 mmϕ was set as a reference electrode on the reference electrode setting position.

Finally, the cell was charged with 1.0 mL of an electrolytic solution (ethylene carbonate/dimethyl carbonate = 1/2 vol%, LiPF₆ 1 mol/L) and then sealed to prepare a three-electrode cell as an evaluation cell.

The cyclic voltammetry was measured as described below.

First, the evaluation cell was connected to an electrochemical measuring device (manufactured by BioLogic Sciences Instruments) and left for 3 hours. Next, the spontaneous potential was measured, and then, the potential was swept at a sweep speed of 1 mV/s in a sweep range of 2.5 V to 4.5 V. The sweep was repeated 10 times at room temperature of 25°C ± 5°C. Finally, the current value was measured at a potential of 4.25 V during the first sweep to higher potential and the measured value was divided by the weight of the carbon material included in the electrode to calculate the current value due to the reaction between the carbon material and the electrolytic solution.

Evaluation of battery characteristic;
A nonaqueous electrolyte secondary battery was prepared as described below to evaluate the battery characteristic.

### (Positive electrode)

First, 5.0 g of ethanol was added to 0.1 g of each of the carbon materials in Examples 1 to 6 and Comparative Examples 1 to 3, and the mixture was treated with an ultrasonic cleaner (manufactured by AS ONE Corporation) for 5 hours to prepare a dispersing liquid of the carbon material.

Next, LiCo_{1/3}Ni_{1/3}Mn_{1/3}O₂ as a positive electrode active material was prepared by the method described in a non-patent document (Journal of PowerSources, Vol. 146, pp. 636-639 (2005)) .

That is, first, lithium hydroxide was mixed with a ternary hydroxide containing cobalt, nickel, and manganese at a molar ratio of 1 : 1 : 1 to obtain a mixture. Next, the mixture was heated at 1,000°C in an air atmosphere to prepare a positive electrode active material.

Next, 3 g of the obtained positive electrode active material (LiCo_{1/3}Ni_{1/3}Mn_{1/3}O₂) was added to 9 g of ethanol, and the mixture was stirred with a magnetic stirrer at 600 rpm for 10 minutes to prepare a dispersing liquid of the positive electrode active material.

Then, the dispersing liquid of the positive electrode active material was dropped into the dispersing liquid of the carbon material with a spuit. During the dropping, the dispersing liquid of the carbon material was continuously treated with an ultrasonic cleaner (manufactured by AS ONE Corporation). Then, the mixture of the dispersing liquids was stirred with a magnetic stirrer for 3 hours.

Finally, the mixture of the dispersing liquids was subjected to suction filtration, and then, the resulting mixture was vacuum-dried at 110°C for 1 hour to prepare a composite of the positive electrode active material and the carbon material (active material-carbon material composite). The above-mentioned steps were repeated to prepare the composite of the amount required for preparing a positive electrode.

Next, a binder (PVdF, solid content concentration: 12% by weight, NMP solution) was mixed with 96 parts by weight of the composite so that the solid content was 4 parts by weight to prepare a slurry. Next, the slurry was applied to aluminum foil (20 µm), then heated with a blow oven at 120°C for 1 hour to remove the solvent, and then vacuum-dried at 120°C for 12 hours. Next, the slurry was applied also to the back surface of the aluminum foil and dried in the same manner.

Finally, the positive electrode was pressed with a roll press machine.

The capacity of the positive electrode was calculated from the electrode weight per unit area and the theoretical capacity of the positive electrode active material (150 mAh/g). As a result, the capacity of the positive electrode (per one side) was 5 mAh/cm².

### (Negative electrode)

A negative electrode was prepared as described below.

First, a binder (PVdF, solid content concentration: 12% by weight, NMP solution) was mixed with 100 parts by weight of a negative electrode active material (artificial graphite) so that the solid content was 5 parts by weight to prepare a slurry. Next, the slurry was applied to copper foil (20 µm), then heated with a blow oven at 120°C for 1 hour to remove the solvent, and then vacuum-dried at 120°C for 12 hours. Next, the slurry was applied also to the back surface of the copper foil and dried in the same manner.

Finally, the resulting product was pressed with a roll press machine to prepare a negative electrode. The capacity of the negative electrode was calculated from the electrode weight per unit area and the theoretical capacity of the negative electrode active material (350 mAh/g). As a result, the capacity of the negative electrode (per one side) was 6.0 mAh/cm².

### (Manufacture of nonaqueous electrolyte secondary battery)

First, the prepared positive electrode (electrode portion: 40 mm × 50 mm), negative electrode (electrode portion: 45 mm × 55 mm), and a separator (polyolefin-based microporous film, 25 µm, 50 mm × 60 mm) were stacked in the order of the negative electrode/the separator/the positive electrode/the separator/the negative electrode so that the capacity of the positive electrode was 200 mAh (one positive electrode, two negative electrodes). Next, an aluminum tab and a nickel-plated copper tab were vibration-welded to the positive electrode and the negative electrode at both ends, respectively, and then the resulting stacked body was put in a bag-shaped aluminum laminate sheet, and the sheet was sealed at the three sides by heat-welding to prepare a nonaqueous electrolyte secondary battery before the charging with an electrolytic solution. The nonaqueous electrolyte secondary battery before the charging with an electrolytic solution was vacuum-dried at 60°C for 3 hours, then, 20 g of a nonaqueous electrolyte (ethylene carbonate/dimethyl carbonate = 1/2 vol%, LiPF₆ 1 mol/L) was put in the battery, and the resulting battery was sealed under reduced pressure to prepare a nonaqueous electrolyte secondary battery. The above-mentioned steps were performed in an atmosphere having a dew point of -40°C or less (dry box). Finally, the nonaqueous electrolyte secondary battery was charged to 4.25 V and then left at 25°C for 100 hours, the gas generated in the atmosphere having a dew point of -40°C or less (dry box) and the excess electrolytic solution were removed, and then the battery was sealed under reduced pressure again to prepare a nonaqueous electrolyte secondary battery.

### (Cycle characteristic)

The cycle characteristic was evaluated by the following method. First, the prepared nonaqueous electrolyte secondary battery was put in a thermostat at 45°C, and connected to a charge/discharge device (HJ1005SD8, manufactured by HOKUTO DENKO CORPORATION). Next, cycle operation was performed in which constant current/constant voltage charging (current value: 20 mA, charge end voltage: 4.25 V, constant voltage discharge voltage: 4.25 V, constant voltage discharge end condition: elapse of 3 hours or a current value of 4 mA) and constant current discharging (current value: 100 mA, discharge end voltage: 2.5 V) were repeated 300 times. Finally, the first discharge capacity was set to 100 and the proportion of the 300th discharge capacity was calculated to determine the discharge capacity maintenance rate (cycle characteristic). The cycle characteristic was evaluated in accordance with the following evaluation criteria.

### [Evaluation criteria]

Good ... The above-mentioned proportion (cycle characteristic) is 80% or more
Poor ... The above-mentioned proportion (cycle characteristic) is less than 80%

The results are shown in Table 1 below.

**[Table 1]**

| | Amount of residual resin (% by weight) | Evaluation by X-ray (a/b) | C/O ratio | Current value(4. 25V(vs. Li⁺/Li)) | Cycle characteristic | |
|---|---|---|---|---|---|---|
| Example 1 | 3.0 | 0.79 | 20.0 | 0.013 A/g | 85% | Good |
| Example 2 | 0.1 | 9.11 | 200.0 | 0.001 A/g | 82% | Good |
| Example 3 | 0.5 | 5.26 | 161.0 | 0.006 A/g | 81% | Good |
| Example 4 | 0.8 | 1.91 | 133.0 | 0.007 A/g | 82% | Good |
| Example 5 | 0.2 | 8.30 | 191.0 | 0.003 A/g | 81% | Good |
| Example 6 | 1.2 | 1.37 | 98.0 | 0.009 A/g | 84% | Good |
| Comparative Example 1 | 38.7 | 0.30 | 8.4 | 0.052 A/g | 65% | Poor |
| Comparative Example 2 | 0.0 | 0.09 | 85.2 | 0.011 A/g | 71% | Poor |
| Comparative Example 3 | 0.0 | 11.90 | 562 | 0.001 A/g | 72% | Poor |

### (Example 7)

In Example 7, a nonaqueous electrolyte secondary battery was prepared as described below for evaluation.

### (Positive electrode)

First, 5.0 g of ethanol was added to 0.1 g of the carbon material obtained in Examples 1, and the mixture was treated with an ultrasonic cleaner (manufactured by AS ONE Corporation) for 5 hours to prepare a dispersing liquid of the carbon material.

Next, LiCo_{1/3}Ni_{1/3}Mn_{1/3}O₂ as a positive electrode active material was prepared by the method described in a non-patent document (Journal of PowerSources, Vol. 146, pp. 636-639 (2005)).

That is, first, lithium hydroxide was mixed with a ternary hydroxide containing cobalt, nickel, and manganese at a molar ratio of 1 : 1 : 1 to obtain a mixture. Next, the mixture was heated at 1,000°C in an air atmosphere to prepare a positive electrode active material.

Next, 3 g of the obtained positive electrode active material (LiCo_{1/3}Ni_{1/3}Mn_{1/3}O₂) was added to 9 g of ethanol, and the mixture was stirred with a magnetic stirrer at 600 rpm for 10 minutes to prepare a dispersing liquid of the positive electrode active material.

Then, the dispersing liquid of the positive electrode active material was dropped into the dispersing liquid of the carbon material with a spuit. During the dropping, the dispersing liquid of the carbon material was continuously treated with an ultrasonic cleaner (manufactured by AS ONE Corporation). Then, the mixture of the dispersing liquids was stirred with a magnetic stirrer for 3 hours.

Finally, the mixture of the dispersing liquids was subjected to suction filtration, and then, the resulting mixture was vacuum-dried at 110°C for 1 hour to prepare a composite of the positive electrode active material and the carbon material (active material-carbon material composite). The above-mentioned steps were repeated to prepare the composite of the amount required for preparing a positive electrode.

Next, a binder (PVdF, solid content concentration: 12% by weight, NMP solution) was mixed with 96 parts by weight of the composite so that the solid content was 4 parts by weight to prepare a slurry. Next, the slurry was applied to aluminum foil (20 µm), then heated with a blow oven at 120°C for 1 hour to remove the solvent, and then vacuum-dried at 120°C for 12 hours. Next, the slurry was applied also to the back surface of the aluminum foil and dried in the same manner.

Finally, the positive electrode was pressed with a roll press machine.

The capacity of the positive electrode was calculated from the electrode weight per unit area and the theoretical capacity of the positive electrode active material (150 mAh/g). As a result, the capacity of the positive electrode (per one side) was 5 mAh/cm².

### (Negative electrode)

A negative electrode was prepared as described below.

First, a binder (PVdF, solid content concentration: 12% by weight, NMP solution) was mixed with 100 parts by weight of a negative electrode active material (artificial graphite) so that the solid content was 5 parts by weight to prepare a slurry. Next, the slurry was applied to copper foil (20 µm), then heated with a blow oven at 120°C for 1 hour to remove the solvent, and then vacuum-dried at 120°C for 12 hours. Next, the slurry was applied also to the back surface of the copper foil and dried in the same manner.

Finally, the resulting product was pressed with a roll press machine to prepare a negative electrode. The capacity of the negative electrode was calculated from the electrode weight per unit area and the theoretical capacity of the negative electrode active material (350 mAh/g). As a result, the capacity of the negative electrode (per one side) was 6.0 mAh/cm².

### (Manufacture of nonaqueous electrolyte secondary battery)

First, LiPF₆ was dissolved in a mixed solution of ethylene carbonate and dimethyl carbonate at a volume ratio of 1 : 2 so that the concentration of the LiPF₆ was 1 mol/L to prepare an electrolytic solution. Next, 99.5 g of the prepared electrolytic solution and 0.5 g of vinylene carbonate (manufactured by KISHIDA CHEMICAL Co., Ltd.) were mixed to prepare a nonaqueous electrolyte having a concentration of 0.5% by weight.

Next, the positive electrode (electrode portion: 40 mm × 50 mm) and the negative electrode (electrode portion: 45 mm × 55 mm) prepared as described above and a separator (polyolefin-based microporous film, 25 µm, 50 mm × 60 mm) were stacked in the order of the negative electrode/the separator/the positive electrode/the separator/the negative electrode so that the capacity of the positive electrode was 200 mAh (one positive electrode, two negative electrodes). Next, an aluminum tab and a nickel-plated copper tab were vibration-welded to the positive electrode and the negative electrode at both ends, respectively, and then the resulting stacked body was put in a bag-shaped aluminum laminate sheet, and the sheet was sealed at the three sides by heat-welding to prepare a nonaqueous electrolyte secondary battery before the charging with an electrolytic solution. The nonaqueous electrolyte secondary battery before the charging with an electrolytic solution was vacuum-dried at 60°C for 3 hours, then, 1.0 mL of the nonaqueous electrolyte prepared by the above-mentioned method was put in the battery, and the resulting battery was sealed under reduced pressure to prepare a nonaqueous electrolyte secondary battery.

The above-mentioned steps were performed in an atmosphere having a dew point of -40°C or less (dry box). Finally, the nonaqueous electrolyte secondary battery was charged to 4.25 V and then left at 25°C for 100 hours, the gas generated in the atmosphere having a dew point of -40°C or less (dry box) and the excess electrolytic solution were removed, and then the battery was sealed under reduced pressure again to prepare a nonaqueous electrolyte secondary battery.

### (Example 8)

A nonaqueous electrolyte secondary battery was prepared in the same manner as in Example 7 except that a nonaqueous electrolyte prepared as described below was used as the nonaqueous electrolyte.

First, LiPF₆ was dissolved in a mixed solution of ethylene carbonate and dimethyl carbonate at a volume ratio of 1 : 2 so that the concentration of the LiPF₆ was 1 mol/L to prepare an electrolytic solution. Next, 99 g of the prepared electrolytic solution and 1 g of succinic anhydride (manufactured by Wako Pure Chemical Industries, Ltd.) as a cyclic acid anhydride were mixed to prepare a nonaqueous electrolyte having a concentration of 1% by weight.

### (Cycle characteristic)

The cycle characteristics of the nonaqueous electrolyte secondary batteries prepared in Examples 7 and 8 were evaluated by the following method. First, the prepared nonaqueous electrolyte secondary battery was put in a thermostat at 45°C, and connected to a charge/discharge device (HJ1005SD8, manufactured by HOKUTO DENKO CORPORATION). Next, cycle operation was performed in which constant current/constant voltage charging (current value: 20 mA, charge end voltage: 4.25 V, constant voltage discharge voltage: 4.25 V, constant voltage discharge end condition: elapse of 3 hours or a current value of 4 mA) and constant current discharging (current value: 100 mA, discharge end voltage: 2.5 V) were repeated 300 times. Finally, the first discharge capacity was set to 100 and the proportion of the 300th discharge capacity was calculated to determine the discharge capacity maintenance rate (cycle characteristic). The cycle characteristic was evaluated in accordance with the following evaluation criteria.

### [Evaluation criteria]

Good ... The above-mentioned proportion (cycle characteristic) is 80% or more
Poor ... The above-mentioned proportion (cycle characteristic) is less than 80%

The results are shown in Table 2 below.

**[Table 2]**

| | Additive | Cycle characteristic | |
|---|---|---|---|
| Example 7 | Vinylene carbonate | 90% | Good |
| Example 8 | Succinic anhydride | 88% | Good |

## Claims

1. A carbon material comprising a graphene layered structure,
the carbon material being mixed with Si at a weight ratio of 1 : 1 to produce a mixture, the mixture having an X-ray diffraction spectrum having a ratio between a peak height a and a peak height b a/b of 0.2 or more and 10.0 or less as being measured, the peak height a being highest in a range of 2θ of 24° or more and less than 28°, and the peak height b being highest in a range of 2θ of 28° or more and less than 30°, and
the carbon material being included in an electrode as a working electrode, the working electrode generating a current with a lithium metal as a reference electrode and a counter electrode using an electrolytic solution containing LiPF₆ having a concentration of 1 mol/L and a mixed solution of ethylene carbonate and dimethyl carbonate at a volume ratio of 1 : 2, and the current having an absolute value measured by cyclic voltammetry of 0.001 A/g or more and 0.02 A/g or less at a potential of 4.25 V (vs. Li⁺/Li).

2. A carbon material comprising a graphene layered structure,
the carbon material being mixed with Si at a weight ratio of 1 : 1 to produce a mixture, the mixture having an X-ray diffraction spectrum having a ratio between a peak height a and a peak height b a/b of 0.2 or more and 10.0 or less as being measured, the peak height a being highest in a range of 2θ of 24° or more and less than 28°, and the peak height b being highest in a range of 2θ of 28° or more and less than 30°, and
the carbon material having a number ratio of carbon atoms to oxygen atoms (C/O ratio) measured by elemental analysis of 20 or more and 200 or less.

3. The carbon material according to claim 1 or 2, wherein the carbon material is exfoliated graphite.

4. The carbon material according to any one of claims 1 to 3, wherein the carbon material is used in an electrode for an electricity storage device.

5. An electrode for an electricity storage device, the electrode comprising the carbon material according to any one of claims 1 to 4.

6. An electricity storage device comprising the electrode according to claim 5.

7. A nonaqueous electrolyte secondary battery comprising:
the electrode according to claim 5; and
a nonaqueous electrolyte.

8. The nonaqueous electrolyte secondary battery according to claim 7, wherein the nonaqueous electrolyte contains an electrolytic solution of a solute dissolved in a nonaqueous solvent and contains a compound that reacts at 0.0 V or more and 2.0 V or less with respect to Li/Li⁺, and a content of the compound is 0.01% by weight or more and 10% by weight or less based on 100% by weight of the nonaqueous electrolyte.

9. The nonaqueous electrolyte secondary battery according to claim 7, wherein the nonaqueous electrolyte contains an electrolytic solution of a solute dissolved in a nonaqueous solvent and contains a compound that reacts at 2.0 V or more and 5.0 V or less with respect to Li/Li⁺, and a content of the compound is 0.01% by weight or more and 10% by weight or less based on 100% by weight of the nonaqueous electrolyte.
